# EUROPEAN PATENT APPLICATION

(11) **EP 4 752 351 A1**
(43) Date of publication of application: **03.06.2026**
(21) Application number: 24871451.1
(22) Date of filing: 12.07.2024
(51) Int. Cl.: F02C 7/18, F01D 25/00, F01D 25/12, F02C 7/00

(54) **COOLING WALL PART STRUCTURE, HIGH-TEMPERATURE COMPONENT PROVIDED WITH SAME, AND METHOD FOR MANUFACTURING COOLING WALL PART STRUCTURE**

(30) Priority: 27.09.2023 JP 2023166234
(71) Applicant: Mitsubishi Heavy Industries Aero Engines, Ltd., Komaki-shi, Aichi 485-0826, (JP)
(72) Inventor: KATAYAMA, Akira, Komaki-shi, Aichi 485-0826 (JP); IKEDA, Yutaka, Komaki-shi, Aichi 485-0826 (JP); FUJIMOTO, Yohei, Komaki-shi, Aichi 485-0826 (JP); SUZUKI, Ryu, Komaki-shi, Aichi 485-0826 (JP)
(74) Representative: Studio Torta S.p.A.
(86) International application number: PCT/JP2024/025261
(87) International publication number: WO 2025/069647

(57) **Abstract**

Provided is a cooling wall part structure that has high cooling efficiency, and that is easy to process and excellent in durability. This cooling wall structure is provided with: an inner surface that faces a high-temperature space in which combustion gas flows; and a cooling flow path (15) that is inclined at a first angle with respect to the inner surface, that guides cooling air from an opening formed in the inner surface toward the direction in which the combustion gas flows, and that cools the inner surface on the downstream side of the opening. The cooling flow path (15) is provided with a main flow path (17) and branch flow paths (18, 19) that are branched from a branch position (D1) partway through the main flow path (17) and are provided on both sides of the main flow path (17) when the inner surface is seen in a plan view. At the branch position (D1) there is formed a branch position wall surface (22) that is formed from the inner surface to the main flow path (17) and that has a second angle greater than the first angle.

## Description

### Technical Field

The present disclosure relates to a cooling wall structure suitable for use in, for example, a combustor or a turbine blade, a high-temperature component including the same, and a method for manufacturing a cooling wall structure.

### Background Art

Various methods have been proposed in which, for high-temperature components such as combustors and turbine blades of aircraft engines, film cooling is performed by flowing a part of compressed air over the surfaces of the components for the purpose of improving durability.

PTL 1 listed below discloses a cooling flow path in which a cylindrical hole, which is a simple cylindrical cooling hole, is curved to have a crescent-shaped cross section, and three branches are added downstream.

### Citation List

### Patent Literature

[PTL 1] U.S. Patent No. 8850828

### Summary of Invention

### Technical Problem

The shape of the cooling flow path disclosed in PTL 1 is expected to have high cooling efficiency, but it is necessary to curve the cross-sectional shape into a crescent shape and further to form a branch flow path downstream thereof. This results in a complicated flow path shape, which makes manufacturing difficult, particularly by laser processing. For example, when applied to the combustors and the turbine blades of aircraft engines, the size is smaller than that of industrial gas turbines, making processing even more difficult.

Furthermore, as shown in FIG. 4 of PTL 1, an overhang portion (position indicated by reference numeral 120 in the drawing) with a thin wall is formed upstream of the opening of the cooling flow path. The overhang portion is likely to be damaged because it is thin and has a small heat capacity. Furthermore, when a top coat layer is formed on the surface of the wall to improve heat resistance, interlayer delamination is likely to occur due to differences in linear expansion coefficients of the top coat layer, a base material, and a bond layer formed between the top coat layer and the base material.

The present disclosure has been made in consideration of the above circumstances, and an object of the present disclosure is to provide a cooling wall structure that has high cooling efficiency, is easy to process, and has excellent durability, a high-temperature component including the same, and a method for manufacturing a cooling wall structure.

### Solution to Problem

According to one aspect of the present disclosure, there is provided a cooling wall structure including: a first wall surface facing a high-temperature space through which a high-temperature fluid flows; and a cooling flow path that is inclined at a first angle with respect to the first wall surface and guides a cooling fluid, from an opening formed in the first wall surface toward a direction in which the high-temperature fluid flows, to cool the first wall surface downstream of the opening, in which the cooling flow path includes a first flow path and branch flow paths that are branched from a branching position midway through the first flow path and are provided on each of both sides of the first flow path when the first wall surface is seen in a plan view, and at the branching position, a branching position wall surface is formed from the first wall surface to the first flow path, the branching position wall surface having a second angle larger than the first angle.

According to one aspect of the present disclosure, there is provided a high-temperature component including the cooling wall structure described above.

According to one aspect of the present disclosure, there is provided a method for manufacturing a cooling wall structure including a first wall surface facing a high-temperature space through which a high-temperature fluid flows, and a cooling flow path that is inclined at a first angle with respect to the first wall surface and guides a cooling fluid, from an opening formed in the first wall surface toward a direction in which the high-temperature fluid flows, to cool the first wall surface downstream of the opening, the cooling flow path including a first flow path and branch flow paths that are branched from a branching position midway through the first flow path and are provided on each of both sides of the first flow path when the first wall surface is seen in a plan view, and at the branching position, a branching position wall surface being formed from the first wall surface to the first flow path, the branching position wall surface having a second angle larger than the first angle, the method including: a first step of forming each of the branch flow paths together with the branching position wall surface by laser processing; and a second step of forming the first flow path by laser processing.

### Advantageous Effects of Invention

The cooling efficiency is high, and the processing is easy, and durability can be improved.

### Brief Description of Drawings

FIG. 1 is a longitudinal sectional view showing a combustor according to one aspect of the present disclosure.
FIG. 2 is an enlarged longitudinal sectional view showing a cooling wall structure of FIG. 1.
FIG. 3 is a perspective view showing a cooling flow path of FIG. 2.
FIG. 4 is an enlarged perspective view of an outlet opening of FIG. 3.
FIG. 5 is a longitudinal sectional view of a wall showing a state in which a branching position wall surface is formed up to a boundary position between a top coat layer and a bond layer.
FIG. 6 is a longitudinal sectional view corresponding to FIG. 2 and showing an overhang portion.
FIG. 7 is a longitudinal sectional view of the wall showing a state in which the branching position wall surface is formed up to a boundary position between the bond layer and a base material.
FIG. 8 is a longitudinal sectional view of the wall showing a state in which the branching position wall surface is formed up to the inside of the base material.
FIG. 9 is a perspective view showing a cooling flow path of a cooling wall structure according to Modification Example 1.
FIG. 10 is a longitudinal sectional view showing the cooling wall structure of FIG. 9.
FIG. 11 is a perspective view showing a cooling flow path of a cooling wall structure according to Modification Example 2.
FIG. 12 is a perspective view showing only a main flow path of FIG. 11.
FIG. 13 is a plan view showing a cooling flow path of a cooling wall structure according to Modification Example 3.
FIG. 14 is a longitudinal sectional view showing a cooling wall structure according to Modification Example 4.
FIG. 15 is a longitudinal sectional view showing a modification example of FIG. 14.

### Description of Embodiments

An embodiment of the present disclosure will be described below with reference to the drawings.

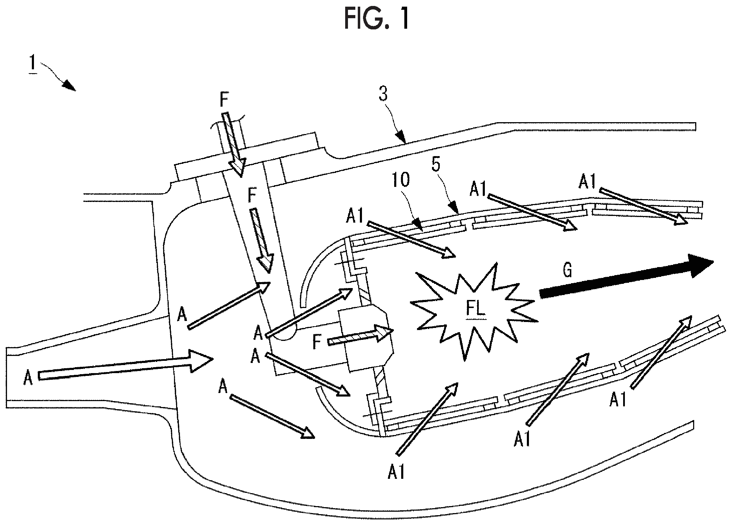

FIG. 1 shows a combustor (high-temperature component) 1 of an aircraft engine. As shown in FIG. 1, the combustor 1 includes a combustion liner 5 provided in an engine casing 3. Fuel F and compressed air A are supplied to the interior of the combustion liner 5, and a flame FL is formed. A cooling flow path is formed in the wall of the combustion liner 5, and a part of the compressed air A is supplied as cooling air A1 from the outer periphery toward the inner periphery of the combustion liner 5. The cooling air A1 flows in a film shape (film-like shape) over the inner surface of the wall of the combustion liner 5, thereby providing film cooling. In this manner, the combustion liner 5 is provided with a cooling wall structure 10 that protects the wall from high-temperature combustion gas G.

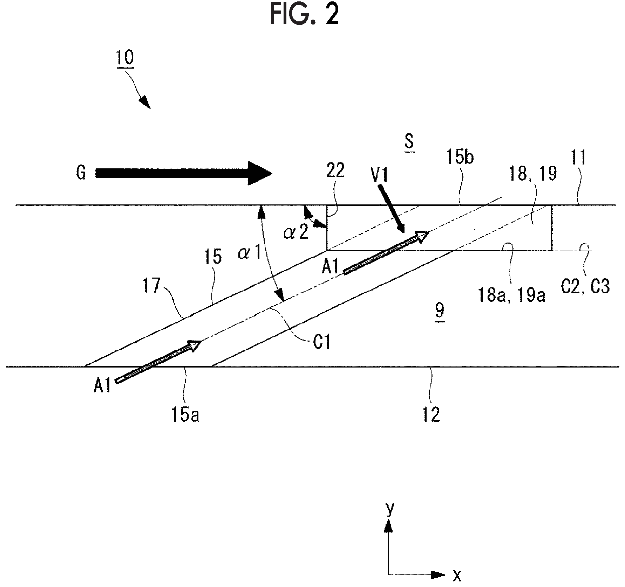

In FIG. 2, the cooling wall structure 10 is shown. The cooling wall structure 10 of FIG. 2 is an enlarged partial view of a wall 9 of the combustion liner 5 of FIG. 1. In the drawing, a direction x is the longitudinal direction of the combustion liner 5 (main flow direction of the combustion gas G), and a direction y is the thickness direction of the wall 9.

The cooling wall structure 10 has a cooling flow path 15 formed to penetrate the wall 9 having a predetermined thickness. The wall 9 has an inner surface (first wall surface) 11 facing the high-temperature space S through which the combustion gas G flows, and an outer surface 12 facing the inner surface 11 and located upstream of the flow of the cooling air A1 (see FIG. 1).

The cooling flow path 15 is formed linearly between the inner surface 11 and the outer surface 12 with the first axis C1 as the central axis. The cooling flow path 15 has an inlet opening 15a that opens to the outer surface 12 and an outlet opening 15b that opens to the inner surface 11. The cooling air A1 flowing in from the inlet opening 15a flows out from the outlet opening 15b into the high-temperature space S, and flows along the inner surface 11 downstream of the outlet opening 15b, thereby performing film cooling. The cooling flow path 15 is inclined at a first angle α1 formed by the first axis C1 with respect to the inner surface 11. The first angle α1 is set to, for example, 15° or more and 45° or less.

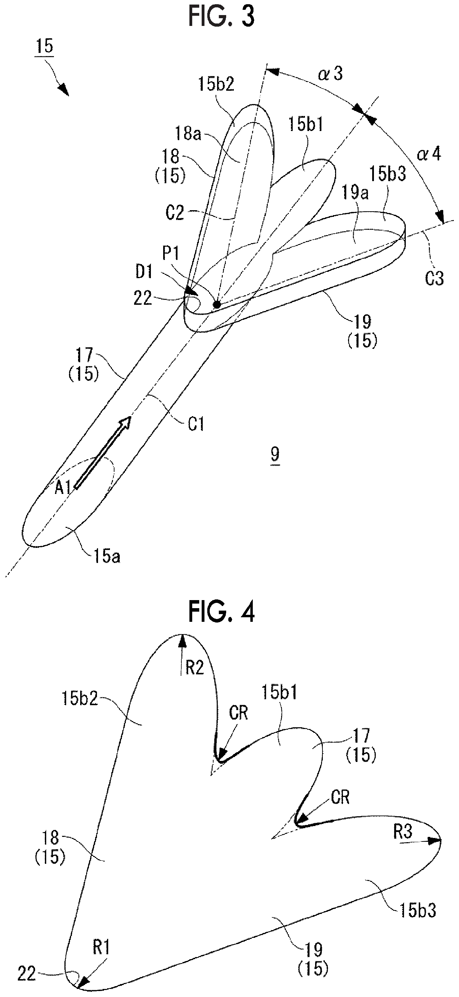

FIG. 3 shows the shape of the cooling flow path 15 in three dimensions. The cooling flow path 15 includes a main flow path 17, a first branch flow path 18 and a second branch flow path 19. The first branch flow path 18 is located to the left of the flow direction of the cooling air A1 flowing through the main flow path 17 when the main flow path 17 is seen in a plan view (when viewed from the inner surface 11), and the second branch flow path 19 is located to the right of the flow direction of the cooling air A1 flowing through the main flow path 17 when the main flow path 17 is seen in a plan view. The first branch flow path 18 and the second branch flow path 19 are preferably provided symmetrically with respect to the main flow path 17.

The main flow path 17 has a circular cross section (flow path cross section), the inlet opening 15a on the outer surface 12, and a main flow path outlet opening 15b1 on the inner surface 11.

The first branch flow path 18 is branched to the left from a branching position D1 including a branch point P1. The branch point P1 is provided at a position corresponding to a midway position on the first axis C1 of the main flow path 17. The first branch flow path 18 has an upper surface that opens as a first branch opening 15b2 on the inner surface 11 and is formed along a second axis C2. The branch point P1 is an intersection of the first axis C1 and the second axis C2 passing through a bottom portion 18a. A first branch angle α3 formed by the second axis C2 and the first axis C1 of the main flow path 17 is set to be 15° or more and 90° or less. The first branch angle α3 represents the angle when the first axis C1 and the second axis C2 are viewed from a direction V1 (a direction perpendicular to the first axis C1) in the longitudinal section of FIG. 2.

As shown in FIG. 2, the first branch flow path 18 is a bottomed groove portion that is dug to a certain depth in the thickness direction from the inner surface 11 toward the outer surface 12. That is, the first branch flow path 18 has a so-called crater shape. The bottom portion 18a of the first branch flow path 18 is a flat surface extending substantially parallel to the inner surface 11, for example.

The second branch flow path 19 is branched to the right from a branching position D1 including the branch point P1. The second branch flow path 19 has an upper surface that opens as a second branch opening 15b3 on the inner surface 11 and is formed along a third axis C3. The branch point P1 is an intersection of the first axis C1 and the third axis C3 passing through a bottom portion 19a. A second branch angle α4 formed by the third axis C3 and the first axis C1 of the main flow path 17 is set to be 15° or more and 90° or less. The second branch angle α4 represents the angle when the first axis C1 and the third axis C3 are viewed from the direction V1 (the direction perpendicular to the first axis C1) in the longitudinal section of FIG. 2. Preferably, the second branch angle α4 is equal to the first branch angle α3 (α3 = α4).

As shown in FIG. 2, the second branch flow path 19 is a bottomed groove portion that is dug to a certain depth in the thickness direction from the inner surface 11 toward the outer surface 12. That is, the second branch flow path 19 has a so-called crater shape, similarly to the first branch flow path 18. The bottom portion 19a of the second branch flow path 19 is a flat surface extending substantially parallel to the inner surface 11, for example.

A branching position wall surface 22 is formed upstream of the branch point P1 on the first axis C1. The branching position wall surface 22 is formed from the inner surface 11 to the main flow path 17 and constitutes the wall surface at an upstream end of the first branch flow path 18 and the second branch flow path 19. As shown in FIG. 2, the branching position wall surface 22 stands upright at a substantially right angle to the inner surface 11. That is, a second angle α2 formed by the branching position wall surface 22 and the inner surface 11 is set to approximately 90°.

The branching position wall surface 22 has a curved shape such as an arc shape when seen from the inner surface 11 in a plan view. Specifically, the branching position wall surface 22 is formed based on an arc with the branch point P1 located inside. That is, the branching position wall surface 22 is a part of a cylindrical surface with an axis passing through the branch point P1 located inside.

Note that the second angle α2 of the branching position wall surface 22 is not limited to approximately 90°, but may be any angle larger than the first angle α1 of the main flow path 17, for example, 45° or more and 90° or less.

FIG. 4 shows an enlarged view of the outlet opening 15b of the cooling flow path 15 shown in FIG. 3. As shown in the drawing, preferably, a radius of curvature R1 of the branching position wall surface 22, a radius of curvature R2 of a downstream end of the first branch opening 15b2 of the first branch flow path 18, and a radius of curvature R3 of a downstream end of the second branch opening 15b3 of the second branch flow path 19 are the same. Accordingly, for example, when laser processing is used to form the first branch flow path 18 and the second branch flow path 19, a common laser spot diameter can be used at the branching position wall surface 22 and the downstream ends of both branch openings 15b2 and 15b3, eliminating the need to adjust the spot diameter.

In addition, preferably, a chamfered portion CR is provided at the position where the first branch opening 15b2 intersects with the main flow path outlet opening 15b1 and at the position where the second branch opening 15b3 intersects with the main flow path outlet opening 15b1. The chamfered portion CR may be either an R-chamfer or a C-chamfer. Accordingly, stress concentration is alleviated to prevent the occurrence of a crack.

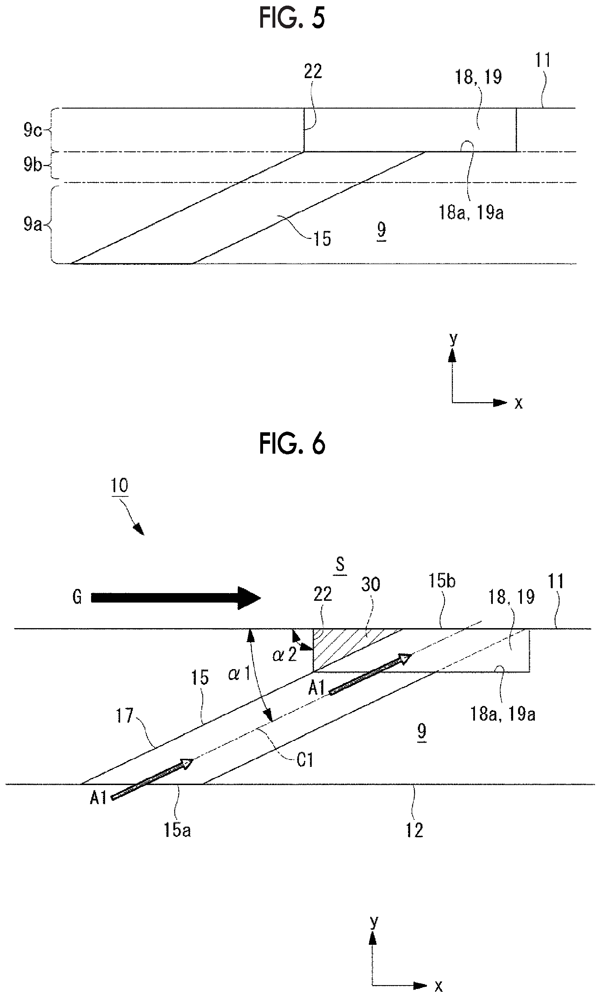

FIG. 5 shows a longitudinal section of the wall 9 corresponding to FIG. 2. As shown in FIG. 5, the wall 9 has a top coat layer 9c formed on the inner surface 11 side of the base material 9a via a bond layer 9b. The base material 9a is made of a general heat-resistant alloy (for example, Waspaloy or Inconel), the bond layer 9b is made of a metallic coating material (for example, NiCrAlY), and the top coat layer 9c is made of a ceramic coating material (for example, YSZ: yttrium-stabilized zirconia).

The branching position wall surface 22 is formed up to a boundary position between the top coat layer 9c and the bond layer 9b. Accordingly, the bottom portion 18a of the first branch flow path 18 and the bottom portion 19a of the second branch flow path 19 coincide with the boundary position between the top coat layer 9c and the bond layer 9b. The base material 9a, the bond layer 9b, and the top coat layer 9c are made of different materials and therefore have different linear expansion coefficients. Therefore, there is a concern that interlayer delamination may occur. Therefore, as shown in FIG. 5, the branching position wall surface 22 is formed up to a boundary position between the top coat layer 9c and the bond layer 9b. Accordingly, it is possible to suppress interlayer delamination between the top coat layer 9c and the bond layer 9b at the branching position wall surface 22.

Next, a method for processing the cooling flow path 15 having the above-described configuration will be described.

The processing method used is laser processing, in which the wall 9 is irradiated with a high-energy density laser to melt and vaporize the wall 9.

First, the first branch flow path 18 and the second branch flow path 19 are formed (first step), and then the main flow path 17 is formed (second step).

When the first branch flow path 18 and the second branch flow path 19 are formed, the inner surface 11 is irradiated with a laser beam in a direction having the second angle α2 (see FIG. 2). The laser beam is used to process the wall 9 up to a predetermined position in the thickness direction, and the laser beam is scanned in the directions of the second axis C2 and the third axis C3 (see FIG. 3) to form the first branch flow path 18 and the second branch flow path 19, which are crater-shaped bottomed groove portions. The shape of the laser beam at this time is set to a circle that coincides with the radius of curvature R1 of the branching position wall surface 22. Accordingly, the radius of curvature R1 of the branching position wall surface 22 can be made to coincide with the radius of curvature R2 of the downstream end of the first branch opening 15b2 of the first branch flow path 18 and the radius of curvature R3 of the downstream end of the second branch opening 15b3 of the second branch flow path 19 (see FIG. 4).

When forming the main flow path 17, the laser beam is irradiated in a direction having the first angle α1 (see FIG. 2) with respect to the inner surface 11 of the wall 9, thereby forming the main flow path 17. The cross-sectional shape of the laser beam coincides with the cross-sectional shape of the main flow path 17, and is, for example, circular.

During the first step of forming the first branch flow path 18 and the second branch flow path 19 as described above, the second angle α2 (approximately 90° in the present embodiment) is made larger than the first angle α1, thereby forming the branching position wall surface 22 having a cylindrical cross section with the branch point P1 (see FIG. 3) located on the inside. Accordingly, the overhang portion 30 (see FIG. 6) is removed. As shown in FIG. 6, the overhang portion 30 is a thin portion which remains between the main flow path 17 and the inner surface 11 after the main flow path 17 is formed in the first step. By removing the overhang portion 30, damage during processing of the cooling flow path 15 and during operation of the cooling wall structure 10 is prevented as much as possible.

The operations and effects of the present embodiment described above are as follows.

The film cooling of the cooling wall structure 10 is performed by flowing cooling air A1 through the cooling wall structure 10 whose inner surface 11 faces the high-temperature space S through which the combustion gas G flows.

The cooling flow path 15 through which the cooling air A1 flows is inclined at the first angle α1 with respect to the inner surface 11, and the cooling air A1 flows along the inner surface 11 toward the direction in which the combustion gas G flows from the outlet opening 15b formed in the inner surface 11, thereby film cooling the inner surface 11 downstream of the outlet opening 15b.

The cooling flow path 15 includes a main flow path 17 and two branch flow paths 18 and 19 that are branched from a midway position of the main flow path 17 and are provided on each of both sides of the main flow path 17. The cooling air A1 flowing out from the main flow path 17 into the high-temperature space S forms a counter rotating vortex pair (CRVP: a pair of positive and negative vortices that reduces the adhesion of the cooling air A1 to the wall). In response to this, anti-CRVP is generated by the cooling air A1 flowing out from the branch flow paths 18 and 19 on both sides with the main flow path 17 interposed therebetween, suppressing the CRVP of the cooling air A1 flowing out from the main flow path 17 and promoting adhesion of the cooling air A1 to the inner surface 11. Accordingly, the cooling performance on the inner surface 11 is improved.

At the branch point P1, the branching position wall surface 22 is formed from the inner surface 11 to the main flow path 17. Since the branching position wall surface 22 has a second angle α2 that is larger than the first angle α1, which is the inclination angle of the main flow path 17, the outlet opening 15b formed by the main flow path 17 is enlarged upstream. Accordingly, a flow from the leading edge can be diffused and a wall surface-attached flow can be further induced.

Since the second angle α2, which is the inclination angle of the branching position wall surface 22, is made larger than the first angle α1 of the main flow path 17, the overhang portion 30, which is the wall of the upstream vicinity of the outlet opening 15b, can be removed. That is, when an opening is formed on the extension of the main flow path 17 while maintaining the inclination at the first angle α1, an overhang portion 30 with a thin wall remains on the upstream side of the opening. In contrast to this, by forming the branching position wall surface 22 having the second angle α2 larger than the first angle α1, the thin overhang portion 30 can be removed. In this way, by removing the thin overhang portion 30, it is possible to prevent damage during processing of the cooling flow path 15 or during operation of the cooling wall structure 10 as much as possible, thereby improving durability.

By setting the second angle α2 to approximately 90°, the thin overhang portion can be effectively removed.

By forming the branching position wall surface 22 into a cylindrical surface shape, stress concentration can be alleviated and a crack can be prevented from occurring.

The chamfered portion CR (see FIG. 4) is provided at the position where the outlet opening 15b formed by the main flow path 17 intersects with the first branch opening 15b2 and the second branch opening 15b3 formed by the branch flow paths 18 and 19. Accordingly, stress concentration can be alleviated to prevent the occurrence of a crack.

The branch flow paths 18 and 19 are formed as bottomed groove portions that are connected to the branching position wall surface 22 and have the same depth as the branching position wall surface 22. Accordingly, the branch flow paths 18 and 19 can be formed simultaneously with the formation of the branching position wall surface 22 by laser processing (first step), making processing easier.

The arc shape of the branching position wall surface 22 and the arc shapes of the downstream ends of the branch flow paths 18 and 19 have the same radii of curvature R1, R2, and R3 (see FIG. 4). Accordingly, processing becomes easier. That is, when laser processing is performed, a common laser spot diameter can be used, and adjustment of the spot diameter becomes unnecessary.

The base material 9a, the bond layer 9b, and the top coat layer 9c that constitute the wall 9 are made of different materials and therefore have different linear expansion coefficients. Therefore, there is a concern that interlayer delamination may occur. Therefore, the branching position wall surface 22 is formed up to a boundary position between the top coat layer 9c and the bond layer 9b. Accordingly, it is possible to suppress interlayer delamination between the top coat layer 9c and the bond layer 9b at the branching position wall surface 22.

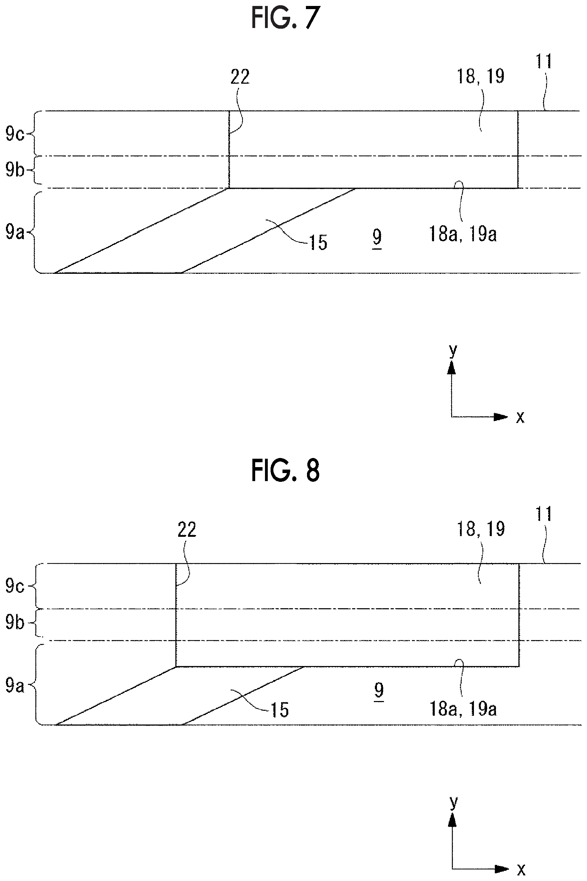

As shown in FIG. 7, the branching position wall surface 22 may be formed up to the boundary position between the bond layer 9b and the base material 9a. Accordingly, it is possible to suppress interlayer delamination between the top coat layer 9c and the bond layer 9b and interlayer delamination between the bond layer 9b and the base material 9a at the branching position wall surface 22.

In addition, as shown in FIG. 8, the branching position wall surface 22 may be formed to the inside of the base material 9a. Accordingly, it is possible to suppress interlayer delamination between the top coat layer 9c and the bond layer 9b and interlayer delamination between the bond layer 9b and the base material 9a at the branching position wall surface 22.

### <Modification Example 1>

The present embodiment can be modified as follows.

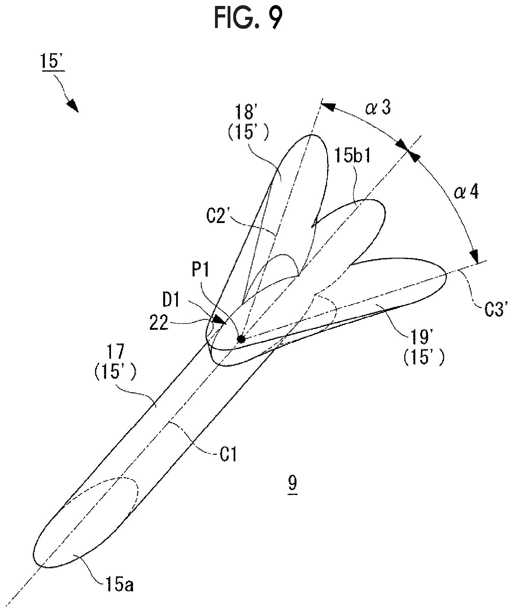

In the cooling wall structure 10 according to the present embodiment described above, the first branch flow path 18 and the second branch flow path 19 are formed in a crater shape with a bottomed groove portion. In contrast, in a cooling flow path 15' of a cooling wall structure according to the present modification example, as shown in FIG. 9, a first branch flow path 18' and a second branch flow path 19' have bottom portions 18a' and 19a' with a cylindrical surface shape, like the main flow path 17. The first branch flow path 18' has a second axis C2' and extends from the branch point P1. The second branch flow path 19' has a third axis C3' and extends from the branch point P1.

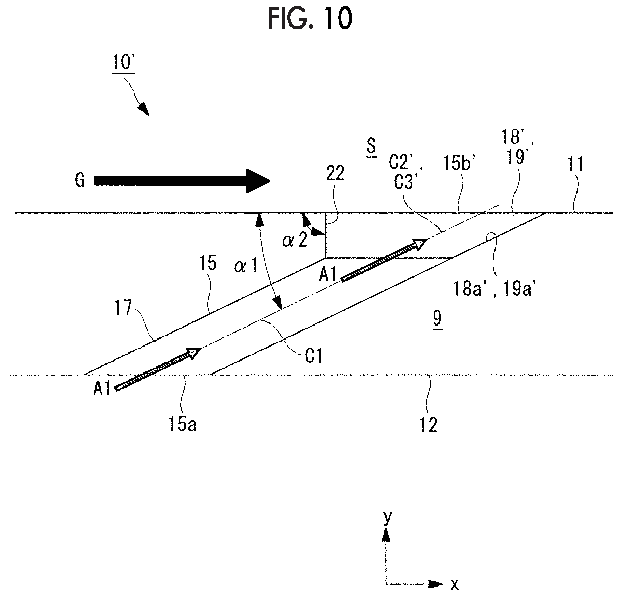

When the inner surface 11 is seen in a plan view, the first branch flow path 18' and the second branch flow path 19' have a first branch angle α3 and a second branch angle α4 that are the same in magnitude. As shown in FIG. 10, the first branch flow path 18' and the second branch flow path 19' are inclined at a first angle α1, which is the same inclination as the first axis C1 of the main flow path 17.

The first branch flow path 18' and the second branch flow path 19' are formed by irradiating the inner surface 11 with a laser beam in a direction having the first angle α1. By using a laser beam with a circular cross section, bottom portions 18a' and 19a' with a cylindrical surface shape are formed.

However, in the cooling wall structure 10' shown in FIG. 10, a branching position wall surface 22 having the second angle α2 is formed, similarly to the first embodiment. The step of forming the branching position wall surface 22 is performed by irradiating the inner surface 11 with a laser beam in a direction having a second angle α2 at either the timing before or after the step of forming the first branch flow path 18' and the second branch flow path 19'.

### <Modification Example 2>

Further, the present embodiment can be modified as follows.

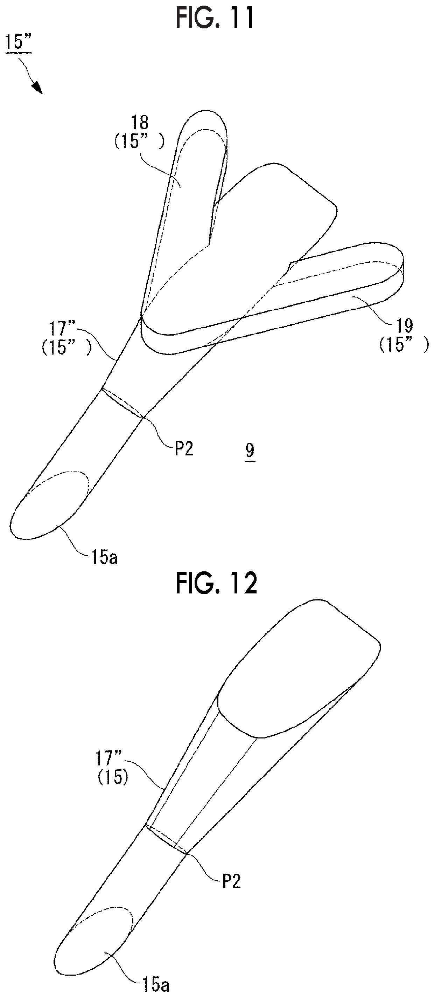

As shown in a cooling flow path 15" of the present modification example in FIG. 11, as a main flow path 17", a fan shape in which the flow path cross-sectional area gradually widens toward the downstream side may be employed. The main flow path 17" has a circular cross section from the upstream side to a midway position P2, and the flow path cross-sectional area gradually widens from the midway position P2 toward the downstream side. In FIG. 12, only the main flow path 17" is shown for ease of understanding.

Since the main flow path 17" has a shape in which the flow path cross-sectional area gradually widens toward the downstream side, the flow is more diffused downstream and a wall surface-attached flow is formed, as compared to the case where the main flow path 17 has a round hole shape with a constant diameter as shown in FIG. 2, thereby further improving the film cooling effectiveness.

### <Modification Example 3>

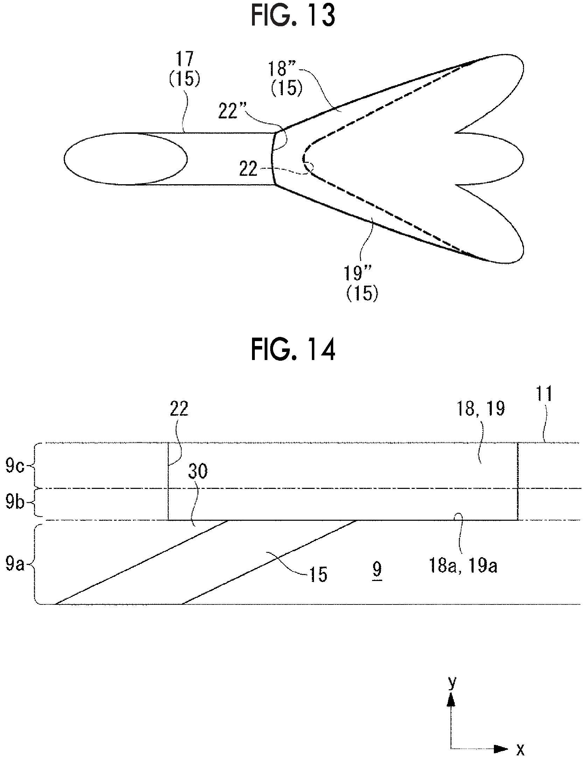

A branching position wall surface 22" having a shape as shown in FIG. 13 may be used. That is, in FIG. 3, the branching position wall surface 22 has a cylindrical cross section (see the dashed line in FIG. 13), but is not limited to such a cylindrical cross section, and for example, a branching position wall surface 22" having a shape close to a flat surface may be used, as shown in FIG. 13. In this case, the first branch flow path 18" and the second branch flow path 19" have a width greater than that of the flow path shown in FIG. 3 (see the dashed lines in FIG. 13). Alternatively, the branching position wall surface may be a combination of a flat surface and a curved surface.

### <Modification Example 4>

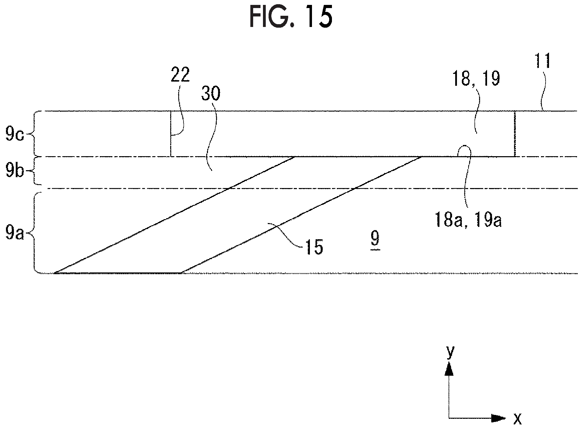

As shown in FIG. 14, the overhang portion 30 may be removed from the top coat layer 9c and the bond layer 9b, and the overhang portion 30 may be left only on the base material 9a. Further, as shown in FIG. 15, the overhang portion 30 may be removed from the top coat layer 9c, the overhang portion 30 may be left on the base material 9a and the bond layer 9b. Since the base material 9a and the bond layer 9b have a larger heat capacity than the top coat layer 9c and are less susceptible to damage due to interlayer delamination or thermal stress concentration, it is preferable to avoid leaving the overhang portion 30 on at least the top coat layer 9c.

In the above-described embodiment and each modification example, the cooling wall structure 10 has been described on the assumption that it is used in a combustor, but the present disclosure is not limited thereto and can be applied to high-temperature components that come into contact with high-temperature gas, such as turbine blades.

The cooling wall structure, the high-temperature component including the same, and the method for manufacturing a cooling wall structure described in each of the above-described embodiments can be understood, for example, as follows.

According to a first aspect of the present disclosure, there is provided a cooling wall structure (10) including: a first wall surface (11) facing a high-temperature space (S) through which a high-temperature fluid (G) flows; and a cooling flow path (15) that is inclined at a first angle with respect to the first wall surface and guides a cooling fluid, from an opening formed in the first wall surface toward a direction in which the high-temperature fluid flows, to cool the first wall surface downstream of the opening, in which the cooling flow path includes a first flow path (17) and branch flow paths (18, 19) that are branched from a branching position (D1) midway through the first flow path and are provided on each of both sides of the first flow path when the first wall surface is seen in a plan view, and at the branching position, a branching position wall surface is formed from the first wall surface to the first flow path, the branching position wall surface having a second angle (α2) larger than the first angle (α1).

The cooling wall structure is cooled by flowing a cooling fluid such as air through the cooling wall structure where the first wall faces a high-temperature space through which a high-temperature fluid such as combustion gas flows.

The cooling flow path through which the cooling fluid flows is inclined at a first angle with respect to the first wall surface, and the cooling fluid flows along the first wall surface toward the direction in which the high-temperature fluid flows from an opening formed in the first wall surface, thereby film cooling the first wall surface downstream of the opening.

The cooling flow path includes a first flow path and branch flow paths that are branched from a midway position of the first flow path and are provided on each of both sides of the first flow path. The cooling fluid flowing out from the first flow path into the high-temperature space forms a counter rotating vortex pair (CRVP: a pair of positive and negative vortices that reduces the adhesion of the cooling fluid to the wall). In response to this, anti-CRVP is generated by the cooling fluid flowing out from the branch flow paths on both sides with the first flow path interposed therebetween, suppressing the CRVP of the cooling fluid flowing out from the first flow path and promoting adhesion of the cooling fluid to the first wall surface. Accordingly, the cooling performance on the first wall surface is improved.

At the branching position, a branching position wall surface is formed from the first wall surface to the first flow path. Since the branching position wall surface has a second angle that is larger than the first angle, which is the inclination angle of the first flow path, the opening formed by the first flow path is enlarged upstream. Accordingly, a flow from the leading edge can be diffused and a wall surface-attached flow can be further induced.

Since the second angle, which is the inclination angle of the branching position wall surface, is set larger than the first angle, the wall between the first wall surface and the upstream vicinity of the opening can be removed. That is, when an opening is formed on the extension of the first flow path while maintaining the inclination at the first angle, an overhang portion with a thin wall remains on the upstream side of the opening. In contrast to this, by forming the branching position wall surface having the second angle larger than the first angle, the thin overhang portion can be removed. In this way, by removing the thin overhang portion, it is possible to prevent damage during processing of the cooling flow path or during operation of the cooling wall structure as much as possible, thereby improving durability.

The branching position wall surface is not limited to a case where the entire upper surface of the flow path is open.

According to a second aspect of the present disclosure, in the cooling wall structure according to the first aspect, the second angle is set to be 45° or more and 90° or less.

By setting the second angle to be 45° or more and 90° or less, the thin overhang portion can be effectively removed. The second angle is preferably as close to 90° as possible, and is, for example, 60° or more, more preferably 80° or more.

According to a third aspect of the present disclosure, in the cooling wall structure according to the first or second aspect, the branching position wall surface has an arc shape when seen from the first wall surface in a plan view.

By forming the branching position wall surface into an arc shape, stress concentration can be alleviated and a crack can be prevented from occurring.

According to a fourth aspect of the present disclosure, in the cooling wall structure according to any one of the first to third aspects, a chamfered portion (CR) is provided at a position where an opening formed in the first wall surface by extending the first flow path intersects with an opening formed in the first wall surface by extending the branch flow path.

A chamfered portion (R surface or C surface) is provided at the position where the opening formed by the first flow path intersects with the opening formed by the branch flow path. Accordingly, stress concentration can be alleviated to prevent the occurrence of a crack.

According to a fifth aspect of the present disclosure, in the cooling wall structure according to any one of the first to fourth aspects, the branching position wall surface has an arc shape when seen from the first wall surface in a plan view, and the arc shape of the branching position wall surface has the same radius of curvature (R1, R2, R3) as an arc shape formed at a downstream end of the branch flow path.

The arc shape of the branching position wall surface and the arc shapes of the downstream ends of the branch flow paths have the same radii of curvature. Accordingly, processing becomes easier. For example, when the branch flow path is formed by laser processing, a common laser spot diameter can be used for the branching position wall surface and the downstream end of the branch flow path, thereby eliminating the need to adjust the spot diameter.

According to a sixth aspect of the present disclosure, the cooling wall structure according to any one of the first to fifth aspects further includes: a base material (9a); a bond layer (9b) formed on a surface of the base material; and a top coat layer (9c) formed on a surface of the bond layer, in which the first wall surface is a surface of the top coat layer, and the branching position wall surface is formed up to a boundary position between the top coat layer and the bond layer.

The base material, the bond layer, and the top coat layer are made of different materials and therefore have different linear expansion coefficients. Therefore, there is a concern that interlayer delamination may occur. Therefore, the branching position wall surface is formed up to the boundary position between the top coat layer and the bond layer. Accordingly, it is possible to suppress interlayer delamination between the top coat layer and the bond layer at the branching position wall surface.

According to a seventh aspect of the present disclosure, the cooling wall structure according to any one of the first to sixth aspects further includes: a base material; a bond layer formed on a surface of the base material; and a top coat layer formed on a surface of the bond layer, in which the first wall surface is a surface of the top coat layer, and the branching position wall surface is formed up to a boundary position between the bond layer and the base material.

Since the branching position wall surface is formed up to the boundary position between the bond layer and the base material, it is possible to suppress interlayer delamination between the top coat layer and the bond layer, and interlayer delamination between the bond layer and the base material, at the branching position wall surface.

According to an eighth aspect of the present disclosure, the cooling wall structure according to any one of the first to sixth aspects further includes: a base material; a bond layer formed on a surface of the base material; and a top coat layer formed on a surface of the bond layer, in which the first wall surface is a surface of the top coat layer, and the branching position wall surface is formed up to the base material.

Since the branching position wall surface is formed up to the base material, it is possible to suppress interlayer delamination between the top coat layer and the bond layer, and interlayer delamination between the bond layer and the base material, at the branching position wall surface.

According to a ninth aspect of the present disclosure, in the cooling wall structure according to any one of the first to eighth aspects, each of the branch flow paths is a bottomed groove portion that is connected to the branching position wall surface and is formed to have the same depth as the branching position wall surface.

The branch flow paths are formed as bottomed groove portions that are connected to the branching position wall surface and have the same depth as the branching position wall surface. Accordingly, the branch flow paths can be formed simultaneously with the formation of the branching position wall surface, making processing easier.

According to a tenth aspect of the present disclosure, in the cooling wall structure according to any one of the first to ninth aspects, each of the branch flow paths is a bottomed groove portion having a cylindrical shape.

According to an eleventh aspect of the present disclosure, in the cooling wall structure (15") according to any one of the first to ninth aspects, the first flow path (17") has a shape in which a flow path cross-sectional area gradually widens toward a downstream side.

The first flow path has a shape (for example, a fan shape) in which a flow path cross-sectional area gradually widens toward the downstream side. Accordingly, the flow can be more diffused downstream than when the first flow path is formed in a round hole shape, resulting in the formation of a wall surface-attached flow, which further improves the film cooling effectiveness.

According to a first aspect of the present disclosure, there is provided a high-temperature component (1) including the cooling wall structure according to any one of the first to eleventh aspects.

Examples of high-temperature components include components that come into contact with high-temperature gas such as combustion gas, and more specifically, combustors and turbine blades used in aircraft engines.

According to a first aspect of the present disclosure, there is provided a method for manufacturing a cooling wall structure including a first wall surface facing a high-temperature space through which a high-temperature fluid flows, and a cooling flow path that is inclined at a first angle with respect to the first wall surface and guides a cooling fluid, from an opening formed in the first wall surface toward a direction in which the high-temperature fluid flows, to cool the first wall surface downstream of the opening, the cooling flow path including a first flow path and branch flow paths that are branched from a branching position midway through the first flow path and are provided on each of both sides of the first flow path when the first wall surface is seen in a plan view, and at the branching position, a branching position wall surface being formed from the first wall surface to the first flow path, the branching position wall surface having a second angle larger than the first angle, the method including: a first step of forming each of the branch flow paths together with the branching position wall surface by laser processing; and a second step of forming the first flow path by laser processing.

After each branch flow path is formed by laser processing, the first flow path is formed by laser processing. Since the branching position wall surface is also processed in the first step, the manufacturing step can be simplified.

### Reference Signs List

1: combustor (high-temperature component)
3: engine casing
5: combustion liner
9: wall
9a: base material
9b: bond layer
9c: top coat layer
10: cooling wall structure
11: inner surface (first wall)
12: outer surface
15, 15', 15": cooling flow path
15a: inlet opening
15b, 15b': outlet opening
15b1: main flow path outlet opening
15b2: first branch opening
15b3: second branch opening
17, 17": main flow path
18, 18': first branch flow path (branch flow path)
18a, 18a', 18a": bottom portion
19, 19', 19": second branch flow path (branch flow path)
19a, 19a': bottom portion
22, 22": branching position wall surface
30: overhang portion
A: compressed air
A1: cooling air
C1: first axis
C2, C2': second axis
C3, C3': third axis
D1: branching position
F: fuel
FL: flame
S: high-temperature space
P1: branch point
R1, R2, R3: radius of curvature
CR: chamfered portion
x: longitudinal direction of combustion liner (main flow direction of combustion gas)
y: thickness direction of wall
α1: first angle
α2: second angle
α3: first branch angle
α4: second branch angle

## Claims

1. A cooling wall structure comprising:
a first wall surface facing a high-temperature space through which a high-temperature fluid flows; and
a cooling flow path that is inclined at a first angle with respect to the first wall surface and guides a cooling fluid, from an opening formed in the first wall surface toward a direction in which the high-temperature fluid flows, to cool the first wall surface downstream of the opening,
wherein the cooling flow path includes a first flow path and branch flow paths that are branched from a branching position midway through the first flow path and are provided on each of both sides of the first flow path when the first wall surface is seen in a plan view, and
at the branching position, a branching position wall surface is formed from the first wall surface to the first flow path, the branching position wall surface having a second angle larger than the first angle.

2. The cooling wall structure according to claim 1,
wherein the second angle is set to be 45° or more and 90° or less.

3. The cooling wall structure according to claim 1,
wherein the branching position wall surface has an arc shape when seen from the first wall surface in a plan view.

4. The cooling wall structure according to claim 1,
wherein a chamfered portion is provided at a position where an opening formed in the first wall surface by extending the first flow path intersects with an opening formed in the first wall surface by extending the branch flow path.

5. The cooling wall structure according to any one of claims 1 to 4,
wherein the branching position wall surface has an arc shape when seen from the first wall surface in a plan view, and
the arc shape of the branching position wall surface has the same radius of curvature as an arc shape formed at a downstream end of the branch flow path.

6. The cooling wall structure according to any one of claims 1 to 4, further comprising:
a base material;
a bond layer formed on a surface of the base material; and
a top coat layer formed on a surface of the bond layer,
wherein the first wall surface is a surface of the top coat layer, and
the branching position wall surface is formed up to a boundary position between the top coat layer and the bond layer.

7. The cooling wall structure according to any one of claims 1 to 4, further comprising:
a base material;
a bond layer formed on a surface of the base material; and
a top coat layer formed on a surface of the bond layer,
wherein the first wall surface is a surface of the top coat layer, and
the branching position wall surface is formed up to a boundary position between the bond layer and the base material.

8. The cooling wall structure according to any one of claims 1 to 4, further comprising:
a base material;
a bond layer formed on a surface of the base material; and
a top coat layer formed on a surface of the bond layer,
wherein the first wall surface is a surface of the top coat layer, and
the branching position wall surface is formed up to the base material.

9. The cooling wall structure according to any one of claims 1 to 4,
wherein each of the branch flow paths is a bottomed groove portion that is connected to the branching position wall surface and is formed to have the same depth as the branching position wall surface.

10. The cooling wall structure according to any one of claims 1 to 4,
wherein each of the branch flow paths is a bottomed groove portion having a cylindrical shape.

11. The cooling wall structure according to any one of claims 1 to 4,
wherein the first flow path has a shape in which a flow path cross-sectional area gradually widens toward a downstream side.

12. A high-temperature component comprising the cooling wall structure according to any one of claims 1 to 4.

13. A method for manufacturing a cooling wall structure including
a first wall surface facing a high-temperature space through which a high-temperature fluid flows, and
a cooling flow path that is inclined at a first angle with respect to the first wall surface and guides a cooling fluid, from an opening formed in the first wall surface toward a direction in which the high-temperature fluid flows, to cool the first wall surface downstream of the opening,
the cooling flow path including a first flow path and branch flow paths that are branched from a branching position midway through the first flow path and are provided on each of both sides of the first flow path when the first wall surface is seen in a plan view, and
at the branching position, a branching position wall surface being formed from the first wall surface to the first flow path, the branching position wall surface having a second angle larger than the first angle, the method comprising:
a first step of forming each of the branch flow paths together with the branching position wall surface by laser processing; and
a second step of forming the first flow path by laser processing.
